# EUROPÄISCHE PATENTSCHRIFT

(11) **EP 3 554 973 B1**
(45) Veröffentlichungstag und Bekanntmachung des Hinweises auf die Patenterteilung: **05.04.2023**
(21) Anmeldenummer: 17838030.9
(22) Anmeldetag: 16.12.2017
(51) Int. Cl.: B65G 47/51, B65G 1/137

(54) **ENDSTELLENVORRICHTUNG FÜR EINE SORTIER- UND KOMMISSIONIERANLAGE**
END-POINT DEVICE FOR A SORTING AND PICKING SYSTEM
DISPOSITIF TERMINAL POUR SYSTÈME DE TRI ET DE PRÉPARATION DE COMMANDES

(30) Priorität: 19.12.2016 DE 102016015061
(43) Veröffentlichungstag der Anmeldung: 23.10.2019
(73) Patentinhaber: Christen, Hansueli, 5079 Zeihen (CH)
(72) Erfinder: CHRISTEN, Hansueli, 5079 Zeihen (CH); BECHER, Jörn, 55127 Mainz (DE)
(74) Vertreter: Straubel, Dirk
(86) Internationale Anmeldenummer: PCT/DE2017/000426
(87) Internationale Veröffentlichungsnummer: WO 2018/113811

(56) Entgegenhaltungen:
- EP-A1- 0 005 740
- EP-A1- 2 354 051
- EP-A1- 2 740 690
- GB-A- 1 501 535
- JP-A- H05 278 722
- JP-A- S59 124 230
- US-B2- 9 278 809

## Beschreibung

Die Erfindung betrifft eine Endstellenvorrichtung für eine Sortier- und Kommissionieranlage gemäß der im Oberbegriff des Anspruchs 1 stehenden Merkmale.

Derartige Endstellenvorrichtungen werden überall dort eingesetzt, wo Warenstücke kommissioniert, sortiert oder verteilt werden, wie zum Beispiel in Postverteilzentren. Ziel ist stets eine Maximierung der Speicherkapazität einer solchen Endstellenvorrichtung, um Totzeiten von vorgeschalteten Anlagen zu verringern und damit deren Auslastung zu erhöhen. Gleichzeitig wird dabei angestrebt, den Personaleinsatz auf der Abnehmerseite der Endstellenvorrichtung so möglichst gering zu halten.

GB 1 501 535 A offenbart eine Vorrichtung nach dem Oberbegriff des Anspruchs 1.

Die EP 2 865 620 A1 offenbart eine Sortier- und Kommissionieranlage mit einer Endstellenvorrichtung, die eine erste Transporteinrichtung und eine an die erste Transporteinrichtung anschließende, als Speicherbahn ausgebildete zweite Transporteinrichtung aufweist. Nach einem Beladen der zweiten Transporteinrichtung wird die Abgabeseite der ersten Transporteinrichtung schrittweise mittels einer Hubvorrichtung angehoben und sequentiell weitere Warenstücke in einer zweiten und gegebenenfalls weiteren Ebene(n) auf die zweite Transporteinrichtung aufgegeben. Als nachteilig hat sich bei dieser bekannten Anlage herausgestellt, dass eine Nachrüstung in bestehende Anlagen nur schwierig zu realisieren ist und dadurch bei einer Umrüstung ein erheblicher Produktionsausfall zu erwarten ist. Überdies nimmt nur eine der beiden Transporteinrichtungen an der Speicherung von Warenstücken während eines Beladungszyklus teil.

Die US 9,278,809 B2 beschreibt ein aus mehreren Rutschen gebildetes System für Gepäckstücke. Der Neigungswinkel einer jeden Rutsche ist variabel einstellbar, um diesen zu erhöhen, wenn ein Gepäckstück auf der Rutsche zum Stehen kommt, oder zu verringern, wenn ein Gepäckstück auf der Rutsche zu schnell wird. Da der Neigungswinkel der Rutschen jeweils von der Geschwindigkeit des darauf befindlichen, individuellen Gepäckstückes abhängig ist und zudem auf eine zu geringe Geschwindigkeit oder ein Stehenbleiben eines Gepäckstückes mit einer Erhöhung des Neigungswinkels reagiert wird, lassen sich auf den Rutschen nicht mehrerer Gepäckstücke gleichzeitig zwischenspeichern.

Die AT 403 156 B zeigt ein Regalsystem mit mehreren nebeneinander und übereinander angeordneten Rampen zum Transport darauf befindlicher Behälter. Wenn eine bestimmte Rampe bereits mit zum Beispiel fünf Behältern gefüllt ist, werden weitere Behälter durch eine mechanische Sperre am Überführen in diese Rampe gehindert. Hieraus resultiert der Nachteil, dass lediglich wenige Behälter nebeneinander auf einer Rampe zwischengespeichert werden können.

Der Erfindung lag daher die Aufgabe zugrunde, eine Endstellenvorrichtung bereitzustellen, die sich ohne aufwendige Umbaumaßnahmen in bestehende Sortier- und Kommissionieranlagen integrieren lässt und zudem eine vergrößerte Speicherkapazität für Warenstücke ermöglicht.

Die Aufgabe wird erfindungsgemäß mit den Merkmalen des Anspruchs 1 gelöst. In der oberen Höhenlage kann die mindestens eine Transporteinrichtung mir dem zulaufseitigen Transportmittel fluchten und auf der Transporteinrichtung befindliche Warenstücke von einer Aufgabeseite zu einer Abgabeseite bewegen. Das vertikale Niveau der Abgabeseite des zulaufseitigen Transportmittels ist stets höher als die Aufgabeseite der jeweiligen Transporteinrichtung, damit die Warenstücke während eines Beladungszyklus ohne weitere Hilfsmittel auf die nachgeschaltete Transporteinrichtung gelangen.

Sofern ein endseitig beispielweise an einer Kommissionieranlage angeordneter Entnahmetisch mit Warenstücken oder eine nachgeschaltete Transporteinrichtung vollständig beladen ist, wird zusätzlicher Speicherraum für Warenstücke benötigt. Diesen stellt die Transporteinrichtung selbst bereit, indem mindestens die Aufgabeseite der Transporteinrichtung in eine untere Höhenlage gebracht ist und Warenstücke mehrlagig auf der Transporteinrichtung ablegbar sind. In der unteren Höhenlage fördert die Transporteinrichtung keine Warenstücke, sondern dient lediglich als Ablagefläche beziehungsweise Speicherraum für diese. Ein derartiger Beladungszyklus beginnt mit dem ersten, ortsfest auf der Transporteinrichtung abgelegten Warenstück und endet nach Erreichen einer vorgebbaren, maximalen Beladungshöhe von Warenstücken. Dem Beladungszyklus schließt sich zeitlich versetzt ein Leerfahren der Transporteinrichtung an, bei welchem die Warenstücke ihre ortsfeste Position auf der Transporteinrichtung verlassen.

Die Aufgabeseite der Transporteinrichtung kann schwenkbeweglich gelagert und gegebenenfalls mit einem variablen Neigungswinkel einstellbar sein. Unter einem Verschwenken der Aufgabeseite wird eine rotatorische Bewegung der mindestens einen Transporteinrichtung um einen von der Aufgabeseite beabstandeten Drehpunkt verstanden. Vorteilhafterweise ist der Drehpunkt ortsfest zu der Transporteinrichtung angeordnet. Die Transporteinrichtung ist in Förderrichtung geneigt. Durch das Absenken der Aufgabeseite wird der Speicherraum besonders effektiv vergrößert, da ein Verschwenken entgegen der Neigung der Transporteinrichtung erfolgt und dadurch der unter der Transporteinrichtung üblicherweise vorhandene freie Bauraum maximal ausgenutzt ist.

Vorzugsweise ist die obere Höhenlage der Aufgabeseite unter ein Höhenniveau der Abgabeseite absenkbar. Hierdurch entsteht ein Speicherraum mit maximaler Größe, der zudem optimal ausgenutzt wird, da die Warenstücke entgegen der Förderrichtung abwärts rutschen und dadurch Spalträume zwischen den Warenstücken verringert werden. Unter der Förderrichtung der Transporteinrichtung wird grundsätzlich die Richtung von der Aufgabeseite zur der Abgabeseite verstanden.

Besonders günstig ist eine Ausführungsform, bei welcher die mindestens eine Transporteinrichtung um ihre Abgabeseite schwenkbar gelagert ist. Grundsätzlich kann der Drehpunkt vergleichbar mit einer Wippe irgendwo zwischen Aufgabeseite und Abgabeseite vorgesehen sein. Aufgrund einer endseitigen Anordnung des Drehpunktes im Bereich der Abgabeseite, schwenkt die Transporteinrichtung um die Abgabeseite, wodurch die Fallhöhe für die Warenstücke während des Abförderns geringstmöglich gewählt ist und das Risiko von Beschädigungen der Warenstücke verringert wird.

Alternativ zu einem abschnittsweisen Absenken der Transporteinrichtung insbesondere mittels einer schwenkbeweglichen Lagerung kann die Aufgabeseite auch zusammen mit der gesamten Transporteinrichtung translatorisch absenkbar und anhebbar gelagert sein. Bei dieser Ausführungsform wird nicht nur die Aufgabeseite, sondern die gesamte Transporteinrichtung für ein Speichern von Warenstücken zunächst abgesenkt und zum Leerfahren wieder angehoben. Eine Translation ist eine Bewegung, bei der alle Punkte der Transporteinrichtung dieselbe Verschiebung erfahren. Zu einem gegebenen Zeitpunkt sind Geschwindigkeiten und Beschleunigungen aller Punkte identisch. Bei dieser Ausführungsform ermöglicht die Lagerung der Transporteinrichtung genau zwei Freiheitsgrade.

Sinnvollerweise grenzt die Abgabeseite einer ersten Transporteinrichtung an die Aufgabeseite einer zweiten Transporteinrichtung an, wobei dann das zulaufseitige Transportmittel aus der ersten Transporteinrichtung gebildet ist. In diesem Fall sind mindestens zwei Transporteinrichtungen hintereinander geschaltet, wobei jeweils die entgegen der Förderrichtung angeordnete Transporteinrichtung das zulaufseitige Transportmittel bildet. Durch das reihenweise Anordnen von mehreren Transporteinrichtungen lässt sich der insgesamt für die Warenstücke zur Verfügung stehende Speicherraum erweitern.

Gemäß einer besonders vorteilhaften Ausführungsform ist zwischen der Aufgabeseite der Transporteinrichtung und der Abgabeseite des zulaufseitigen Transportmittels eine im Wesentlichen vertikal ausgerichtete Rückstauwand angeordnet. Die Rückstauwand verhindert ein Abrutschen von Warenstücken in der unteren Höhenlage der Transporteinrichtung, insbesondere entgegen dessen Förderrichtung. Mit dem Absenken der Aufgabeseite aus der oberen Höhenlage liegen benachbarte Warenstücke einseitig an der Rückstauwand an. Die Rückstauwand kann ortsfest angeordnet sein und ein Vorbeischwenken der Transporteinrichtung ermöglichen. Es ist ebenso denkbar, dass die Rückstauwand aus mehreren teleskopierbaren Wandelementen gebildet ist und an der Transporteinrichtung und/oder dem zulaufseitigen Transportmittel angreift. Gemäß einer weiteren alternativen Ausgestaltung kann die Rückstauwand auch ein elastisches Netz sein, das zwischen der Transporteinrichtung und/oder dem zulaufseitigen Transportmittel aufgespannt ist.

Die Transporteinrichtung und die Rückstauwand bilden vorzugsweise den Speicherraum für Warenstücke.

Vorzugsweise ist die Aufgabeseite und/oder die gesamte Transporteinrichtung mittels einer Antriebseinheit zwischen der oberen Höhenlage und der unteren Höhenlage verfahrbar. Die Antriebseinheit kann insbesondere einen vorzugsweise elektrisch angetriebenen Stellmotor umfassen.

Gemäß einer ersten bevorzugten Ausführungsform kann die Antriebseinheit mit der Aufgabeseite der Transporteinrichtung verbunden sein. Hieraus resultieren günstige Hebelverhältnisse und eine gering zu dimensionierende Antriebseinheit für die Ausführungsform mit einer schwenkbeweglichen Lagerung der Transporteinrichtung. Darüber hinaus lassen sich sequenziell unterschiedliche Höhenlagen der Aufgabeseite aufgrund des verhältnismäßig langen Verfahrweges besonders treffsicherer anfahren.

Für die Ausführungsform mit einer translatorisch absenkbaren und anhebbaren Transporteinrichtung kann die Antriebseinheit an der Transporteinrichtung vorzugsweise im Bereich oder beidseitig ihres Masseschwerpunktes angreifen, um eine Kippbewegung der Transporteinrichtung abzufangen.

Zweckmäßigerweise umfasst die Antriebseinheit außerdem einen Fluidzylinder und/oder einen Linearantrieb. Bei dieser Ausführungsform kann der Stellmotor mit einer Hydraulikpumpe zusammenwirken und einen entsprechenden Fluiddruck für den oder die Fluidzylinder bereitstellen. Unter einem Linearantrieb oder einem Linearantriebssystem werden alle Antriebssysteme bezeichnet, die zu einer translatorischen Bewegung führen. Linearantriebe ermöglichen die Bewegung von Maschinen(elementen) und Anlagen(teilen) in gerader Linie oder einem anderen vorgegebenen Verlauf. Insbesondere der Fluidzylinder ermöglicht ein stufenloses Anfahren der vorgesehenen Höhenlage der Aufgabeseite. Diese Ausführungsform ist bevorzugt für eine Endstellenvorrichtung geeignet, bei welcher ausreichend Platz unter der Transporteinrichtung vorhanden ist.

Gemäß einer zweiten bevorzugten Ausführungsform ist über der Transporteinrichtung ein Galgen angeordnet und die Antriebseinheit wirkt mit einer Seiltrommel und einem darauf aufgelegten Zugseil zusammen, wobei die Antriebseinheit oder eine Umlenkrolle an dem Galgen befestigt ist. Bei dieser Ausführungsform kann der Stellmotor einen Elektromotor umfassen, insbesondere einen steuerbaren Gleichstrommotor, welcher kraftschlüssig mit der Seiltrommel verbunden ist. Mit Hilfe des Zugseiles ist die Höhenlage der Aufgabeseite zwischen oberer und unterer Höhenlage stufenlos einstellbar. Diese Ausführungsform ist bevorzugt für eine Endstellenvorrichtung geeignet, bei welcher ausreichend Platz über der Transporteinrichtung vorhanden ist.

Es ist auch eine Mischform der beiden vorgeschlagenen Ausführungsformen denkbar, bei welcher zwischen dem Galgen und der Transporteinrichtung ein Fluidzylinder angeordnet ist.

Vorteilhafterweise ist an der Aufgabeseite und/oder der Abgabeseite der mindestens einen Transporteinrichtung ein Beladungshöhensensor angeordnet. Der Beladungshöhensensor erfasst in Echtzeit die aktuelle Beladungshöhe der Warenstücke auf der jeweiligen Transporteinrichtung. Der Beladungshöhensensor sollte ortsfest angeordnet sein und ein Vorbeischwenken der Transporteinrichtung während des Absenkens der Aufgabeseite ermöglichen. Hierdurch ist mit Hilfe des Beladungshöhensensors ein schichtweises Stapeln von Warenstücken auf der Transporteinrichtung realisierbar.

Der Beladungshöhensensor kann aus einer Lichtschranke, einem Lichttaster und/oder Ultraschallsensor gebildet sein. Der Begriff Lichtschranke stellt einen Oberbegriff für ein System dar, bei welchem die Unterbrechung eines Lichtstrahls erkannt und als elektrisches Signal angezeigt wird, um auf diese Weise bewegliche Objekte berührungslos detektieren zu können. Bei Einweglichtschranken stehen sich Sender und Empfänger gegenüber. Bei einer Reflex-Lichtschranke befinden sich Sender und Empfänger parallel zueinander in einem gemeinsamen Gehäuse und das Lichtsignal wird an der gegenüberliegenden Seite von einem Reflektor zurückgeworfen. Bei einem Reflex-Lichttaster wird das Lichtsignal von dem zu detektierenden Objekt selbst zurückgeworfen. Der Schaltabstand ist deshalb von den Reflexionseigenschaften der Objektoberfläche abhängig. Sender und Empfänger befinden sich auch hier parallel zueinander in einem gemeinsamen Gehäuse. Der Ultraschallsensor führt ebenfalls Abstandsmessungen durch, welche auf dem Prinzip der Laufzeitmessung von hochfrequenten Schallimpulsen basieren. Dabei wird in regelmäßigen Abständen ein hochfrequenter Schallimpuls vom Ultraschallsensor ausgestrahlt, der sich in Schallgeschwindigkeit in der Luft ausbreitet. Als Ultraschall bezeichnet man Schall mit Frequenzen oberhalb des Hörfrequenzbereichs des Menschen. Er umfasst Frequenzen ab etwa 16 kHz. Wenn der Ultraschallimpuls auf ein Objekt trifft, wird er von diesem reflektiert. Infolgedessen entsteht ein Echo. Dieses Echo wird von Ultraschallsensor aufgenommen. Die Zeitspanne zwischen Senden des Impulses und Auffangen des Echos wird zum Berechnen des Abstands zum Objekt verwendet und dadurch auf die Beladungshöhe geschlossen.

Sinnvollerweise sind mehrere Transporteinrichtungen vorhanden, deren zugehörige(r) Beladungshöhensensor(en) und deren jeweilige Antriebseinheit an ein elektronisches Steuergerät angeschlossen sind und bei einem Überschreiten einer vorgebbaren Beladungshöhe der zuerst auslösende Beladungshöhensensor ein Absenken der zugehörigen Aufgabeseite initiiert. Während des Betriebes wird typischerweise die in Förderrichtung letzte Transporteinrichtung oder sofern vorhanden ein Entnahmetisch mit Warenstücken beaufschlagt. Stößt dieser oder diese an ihre Kapazitätsgrenze wird die vorgegebene Beladungshöhe überschritten und dieser Zustand von dem Beladungshöhensensor erfasst. Das elektronische Steuergerät setzt daraufhin die zugehörige Antriebseinheit in Betrieb, um die Aufgabeseite oder die gesamte in Förderrichtung davor befindlichen Transporteinrichtung aus einer oberen Höhenlage in eine untere Höhenlage zu schwenken.

Sobald die Aufgabeseite aus der oberen Höhenlage herausgeschwenkt oder die Transporteinrichtung abgesenkt ist, dient die Transporteinrichtung lediglich als Stauraum und transportiert keine Warenstücke in Richtung der Abgabeseite. Bei einer angetriebenen Transporteinrichtung wie zum Beispiel einer Gurtbandanlage oder Rollenbahn sind die entsprechenden Förderantriebe inaktiv geschaltet. Die in Förderrichtung davor befindliche Transporteinrichtung oder das zulaufseitige Transportmittel führen anschließend weitere Warenstücke der abgesenkten Aufgabeseite solange zu, bis der zugehörige Beladungssensor erneut eine Überschreitung der vorgesehenen Beladungshöhe erkennt. Die Aufgabeseite oder die Transporteinrichtung kann dann weiter abgesenkt werden und nochmals Warenstücke aufgegeben werden. Das inkrementale Absenken der Aufgabeseite mit jeweils anschließendem Beladen der Transporteinrichtung trägt ebenfalls zu einer Reduzierung der Fallhöhe von Warenstücken auf der Aufgabeseite bei.

Günstigerweise weist die mindestens eine Transporteinrichtung eine Transportbahn aus einem Obertrum einer Gurtbandanlage, worunter auch ein Streifengurtbandförderer verstanden wird, einer Rollenbahn, einem Kugeltisch, einem Lufttisch und/oder einer Rutsche auf. Die Transportbahn dient stets der Auflage von Warenstücken. Die Transportbahn kann von einem Förderantrieb bewegt sein oder bewegte Elemente aufweisen; typischerweise ist dieses bei einem Gurtband der Fall, welches zwischen zwei Umkehren verläuft, wobei dessen Obertrum die Warenstücke aufnimmt und in Förderrichtung transportiert. Bei einer Rollenbahn können alle oder einzelne Rollen ebenfalls von einem Förderantrieb angetrieben sein und aktiv den Transport der Warenstücke vornehmen. Die Rutsche oder Schurre, der Kugeltisch oder der Lufttisch ermöglicht lediglich einen Transport von Warenstücken in Abhängigkeit der Neigung der Transportbahn. Der Vorteil dieser Ausführungsform liegt in der Einfachheit der Anlage und deren Steuerungstechnik, da lediglich das Herabschwenken von der oberen Höhenlage in die untere Höhenlage und zurück koordiniert zu werden braucht.

Besonders bevorzugt sind Endstellenvorrichtungen mit von einem Förderantrieb bewegten Transportbahnen, da bei einem Leerfahren der Endstellenvorrichtung dosiert Warenstücke nacheinander von der Transporteinrichtung abgefördert werden, ohne die schwenkbar gelagerte Transporteinrichtung aus ihrer unteren Höhenlage zu verfahren. Ein Zurückschwenken aus der unteren Höhenlage in die obere Höhenlage erfolgt typischerweise erst bei einer vollständig von Warenstücken geleerten Transporteinrichtung. Bei einer passiven Transporteinrichtung ohne Förderantrieb, wie zum Beispiel einer Rutsche, wird das Leerfahren der Transporteinrichtung ausschließlich durch ein Zurückschwenken der Aufgabeseite in die obere Höhenlage erzielt, wodurch das Risiko besteht, dass sich die gestauten Warenstücke alle auf einmal in Bewegung setzen und mit hoher kinetischer Energie zum Beispiel auf den Entnahmetisch auftreffen, wodurch die Warenstücke Schaden nehmen können. Darüber hinaus fallen bei einem kollektiven Rutschen häufiger einzelne Warenstücke von der Transporteinrichtung herunter.

Zweckmäßigerweise ist in axialer Erstreckung beidseitig der Transportbahn eine Seitenwand angeordnet. Die Seitenwände ermöglichen ein mehrlagiges Speichern von Warenstücken und minimieren dabei das Risiko eines seitlichen Verlustes einzelner Warenstücke.

Zum besseren Verständnis wird die Erfindung nachfolgend anhand von sieben Figuren näher erläutert. Es zeigen die
- **Fig. 1:**: eine Seitenansicht einer Endstellenvorrichtung mit zwei Transporteinrichtungen gemäß einer ersten Ausführungsform in einer ersten Funktionsstellung;
- **Fig. 2:**: eine Ansicht auf die Transporteinrichtungen gemäß Fig. 1 in einer zweiten Funktionsstellung;
- **Fig. 3:**: eine Ansicht auf die Transporteinrichtungen gemäß Fig. 1 und 2 in einer dritten Funktionsstellung;
- **Fig. 4:**: einen Querschnitt durch eine Endstellenvorrichtung mit zwei Transporteinrichtungen gemäß einer zweiten Ausführungsform;
- **Fig. 5:**: eine Seitenansicht einer Endstellenvorrichtung mit zwei Transporteinrichtungen gemäß einer dritten Ausführungsform;
- **Fig. 6:**: eine dreidimensionale Ansicht auf eine Endstellenvorrichtung mit zwei Transporteinrichtungen gemäß einer vierten Ausführungsform in einer ersten Funktionsstellung und
- **Fig. 7:**: eine dreidimensionale Ansicht auf die Endstellenvorrichtung mit den Transporteinrichtungen gemäß Fig. 6 in einer zweiten Funktionsstellung.

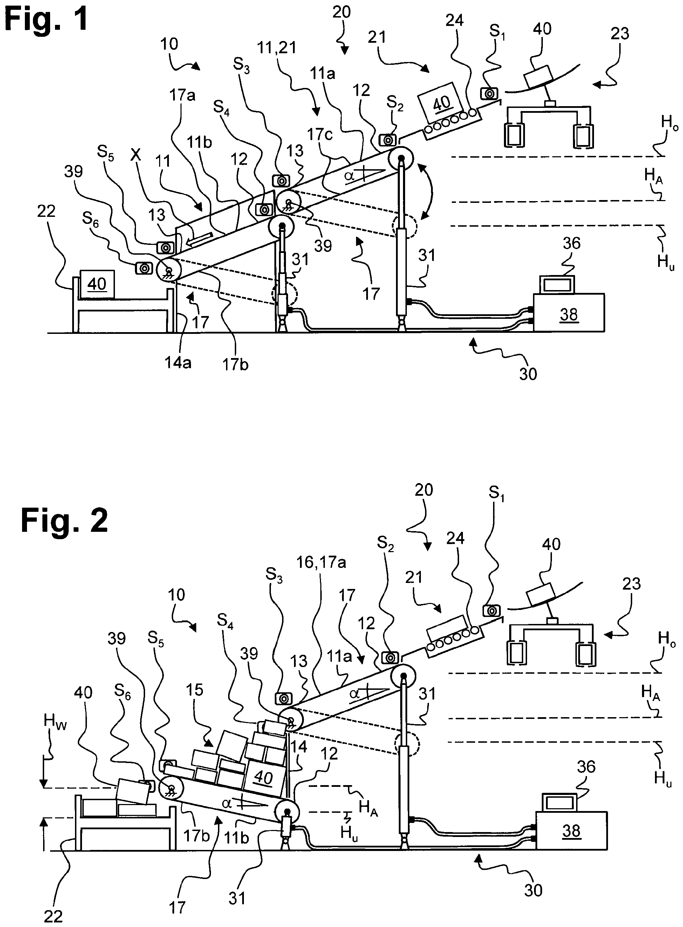

Die Fig. 1 zeigt eine Endstellenvorrichtung 10 als Bestandteil einer Sortier- und Kommissionieranlage 20 zu Beginn eines Beladungszyklus. Über einen Sorter 23 werden der Endstellenvorrichtung 10 diskontinuierlich Warenstücke 40 zugeführt und gelangen zunächst auf einen Staurollenförderer 24 der Endstellenvorrichtung 10. Der Staurollenförderer 24 weist angetriebene Stützrollen auf und reduziert die Bewegungsgeschwindigkeit des oder der darauf befindlichen Warenstücke(s) 40.

Von dem Staurollenförderer 24 gelangen die Warenstücke 40 auf Transporteinrichtungen 11, nämlich eine erste Transporteinrichtung 11a und eine zweite Transporteinrichtung 11b. Für die erste Transporteinrichtung 11a stellt der Staurollenförderer 24 und für die zweite Transporteinrichtung 11b die erste Transporteinrichtung 11a jeweils ein zulaufseitiges Transportmittel 21 dar.

In den gezeigten Ausführungsbeispielen der Fig. 1 bis 3 und 4 sind die erste und zweite Transporteinrichtung 11a, 11b jeweils eine Gurtbandanlage 17. Wesentlicher Bestandteil der Gurtbandanlage 17 ist ein in sich geschlossenes Gurtband 17c, welches durch ein Obertrum 17a und ein Untertrum 17b definiert ist und motorisch angetrieben wird. Das Obertrum 17a dient als Transportbahn 16 (siehe Fig. 2), nimmt die Warenstücke 40 auf und transportiert diese mit einer vorgegebenen Geschwindigkeit von einer Aufgabeseite 12 zu einer Abgabeseite 13 der jeweiligen Transporteinrichtung 11. An der Abgabeseite 13 verlassen die Warenstücke 40 die jeweilige erste und zweite Transporteinheit 11a, 11b. In Förderrichtung X gelangen die Warenstücke 40 von der zweiten Transporteinrichtung 11b auf einen Entnahmetisch 22, von welchem die Warenstücke 40 gelegentlich durch eine Person von Hand abgeholt werden.

Der Staurollenförderer 24 sowie die erste und zweite Transporteinrichtung 11a, 11b fluchten in ihrer axialen Erstreckung miteinander und sind zudem kaskadenartig derart zueinander angeordnet, dass die Warenstücke 40 ohne nennenswerte Fallhöhe übergeben werden.

Jede Transporteinrichtung 11 ist an der Abgabeseite 13 mit einem Schwenklager 39 drehbeweglich gelagert und auf der gegenüberliegenden Aufgabeseite 12 über Fluidzylinder 31 einer Antriebseinheit 30 abgestützt. Die Antriebseinheit 30 umfasst jeweils die an der ersten und zweiten Transporteinrichtung 11a, 11b angreifenden und an ihrem gegenüberliegenden Ende ortsfest angebauten Fluidzylinder 31 und einen Stellmotor 38, an den die Fluidzylinder 31 mittels nicht näher bezeichneter Anschlussleitungen angeschlossen sind. Der Stellmotor 38 kann insbesondere eine elektromotorisch angetriebene Hydraulikpumpe sein.

Durch eine Inbetriebnahme der Fluidzylinder 31 kann die Aufgabeseite 12 der ersten und zweiten Transporteinrichtung 11a, 11b abgesenkt und später auf das ursprüngliche Niveau wieder angehoben werden. In der Funktionsstellung gemäß Fig. 1 wird gerade mit der Beladung der Endstellenvorrichtung 10 begonnen und erste Warenstücke 40 aufgegeben. In diesem Stadium sind die Fluidzylinder 31 der ersten und zweiten Transporteinrichtung 11a, 11b vollständig ausgefahren und demzufolge befindet sich jede der Aufgabeseiten 13 in einer oberen Höhenlage Hₒ. Aus Übersichtsgründen ist in Fig. 1 lediglich die obere Höhenlage Hₒ der ersten Transporteinrichtung 11a dargestellt. Die erste und zweite Transporteinrichtung 11a, 11b weisen einen negativen Neigungswinkel α auf, der zwischen der jeweiligen Transporteinrichtung 11, 11a, 11b und einer horizontalen Ebene aufgespannt ist. Die erste und zweite Transporteinrichtung 11a, 11b sind infolgedessen abwärts geneigt. Die mit unterbrochenen Linien angedeuteten Positionen der ersten und zweiten Transporteinrichtung 11a, 11b entsprechen maximal abgesenkten Stellungen der beiden Aufgabeseiten 12, welche dann eine untere Höhenlage Hᵤ eingenommen haben. Die Abgabeseiten 13 der ersten und zweiten Transporteinrichtungen 11a, 11b verbleiben stets auf einem konstanten Höhenniveau H_{A}. Das Höhenniveau H_{A} liegt typischerweise zwischen der oberen Höhenlage Hₒ und der unteren Höhenlage Hᵤ.

Um ein Herunterfallen der Warenstücke 40 von den Transporteinrichtungen 11a, 11b zu verhindern, sind diese beidseitig von Seitenwänden 14a begrenzt, von denen aus Übersichtsgründen lediglich eine einzige, in der Bildebene hinter der zweiten Transporteinrichtung 11b liegende Seitenwand 14a gezeigt ist. Die Seitenwände 14a können an der Transporteinrichtung 11a, 11b ortsfest befestigt sein und zusammen mit dieser verschwenkt werden. Es ist vorzugsweise jedoch auch möglich, die Seitenwände 14a ortsfest anzuordnen und die Transporteinrichtungen 11, 11a, 11b an den Seitenwänden 14a vorbeischwenken zu lassen.

Die Fig. 2 zeigt eine fortgeschrittene Funktionsstellung der Endstellenvorrichtung 10 bei zunehmender Beladung durch Warenstücke 40, welche bereits eine vorgegebene Beladungshöhe H_{W} zumindest des Entnahmetisches 22 überragen. Zur Erfassung der Beladungshöhe sind in axialer Erstreckung der Endstellenvorrichtung 10 mehrere Beladungshöhensensoren S₁-S₆ angeordnet und mit einem elektronischen Steuergerät 36 verbunden. Die Beladungshöhe im Bereich des Entnahmetisches 22 wurde bereits von dem Beladungshöhensensor S₆ erfasst und daraufhin die Gurtbandanlage 17 der Transporteinrichtung 11b angehalten. Durch ein Einfahren des Fluidzylinders 31 ist die Aufgabeseite 13 der zweiten Transporteinrichtung 11b um das Schwenklager 39 nach unten bis in die untere Höhenlage Hᵤ geschwenkt. Der Neigungswinkel α ist nunmehr positiv ausgerichtet, das heißt, die zweite Transporteinrichtung 11b steigt in Förderrichtung X (siehe Fig. 1) an.

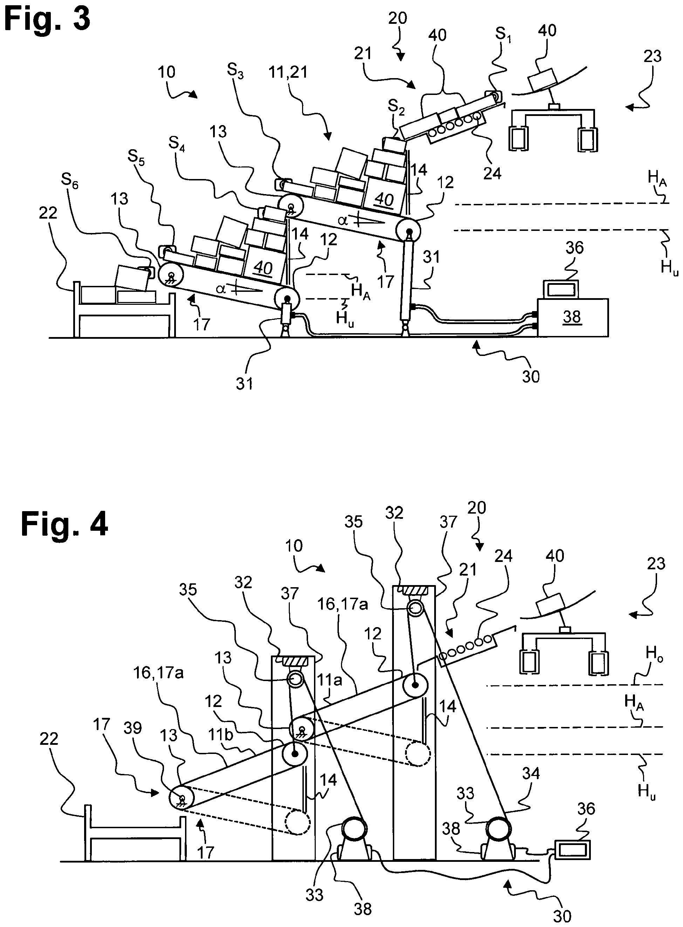

Durch die absenkende Schwenkbewegung der zweiten Transporteinrichtung 11b ist ein Speicherraum 15 entstanden, der in der Darstellung der Fig. 2 auch bereits mit Warenstücken 40 aufgefüllt ist. Damit diese nicht in den Zwischenraum zwischen der Aufgabeseite 12 der zweiten Transporteinrichtung 11b und die Abgabeseite 13 der ersten Transporteinrichtung 11a fallen, erstreckt sich zwischen der ersten und zweiten Transporteinrichtung 11a, 11b eine im Wesentlichen senkrecht ausgerichtete Rückstauwand 14, an welcher die Warenstücke 40 zur Anlage gelangen. Eine weitere Rückstauwand 14 befindet sich im Übergangsbereich von erster Transporteinrichtung 11a und Staurollenförderer 24 (vergleiche Fig. 3).

Der Beladungszustand der zweiten Transporteinrichtung 11b wird von Beladungssensoren S₅, S₆ überwacht, von denen der Beladungssensor S₅ an der Abgabeseite 13 und der Beladungssensor S₄ an der Aufgabeseite 12 angeordnet ist. Beide Beladungssensoren S₅, S₄ sind erkennbar von Warenstücken 40 überdeckt, so dass diese ausgelöst und dem elektronischen Steuergerät 36 ein entsprechendes Signal übermittelt haben. Das elektronische Steuergerät 36 hat daraufhin auch die Gurtbandanlage 17 der ersten Transporteinrichtung 11a stillsetzt und deren Aufgabeseite 12 in die Funktionsstellung entsprechend Fig. 3 herabschwenkt.

In der Fig. 3 ist der maximale Beladungszustand der Endstellenvorrichtung 10 dargestellt. Die erste Transporteinrichtung 11a hat die gleiche Lage eingenommen wie die zweite Transporteinrichtung 11b und ist vollständig mit teilweise mehreren Lagen von Warenstücken 40 bedeckt. Die Beladungssensoren S₃, S₂ identifizieren den vollständigen Beladungszustand der ersten Transporteinrichtung 11a. Der Sorter 23 hat daraufhin solange weitergefördert, bis auch der Staurollenförderer 24 bis zu dem Beladungshöhensensor S₁ mit Warenstücken 40 aufgefüllt ist.

Zum Entleeren der Endstellenvorrichtung 10 werden zunächst die Warenstücke 40 im Bereich des Entnahmetisches 22 entfernt und anschließend zunächst die zweite Transporteinrichtung 11b, anschließend die erste Transporteinrichtung 11a und zum Schluss der Staurollenförderer 24 leergefahren. Um die Fallhöhe der Warenstücke 40 so gering wie möglich zu halten, sollte die jeweils nachgeschaltete Transporteirichtung 11 zunächst wieder in die obere Höhenlage Hₒ zurückgeschwenkt sein.

Die Fig. 4 zeigt eine alternative Ausführungsform der Endstellenvorrichtung 10 in der ersten Funktionsstellung. Abweichend von der in Fig. 1 bis 3 dargestellten Ausführungsform sind anstelle von Fluidzylindern 31 im Bereich der jeweiligen Aufgabeseiten 12 Standsäulen 37 angeordnet, welche die erste und zweite Transporteinrichtung 11a, 11b nach oben überragen. An jeder der Standsäulen 37 greift ein Galgen 32 an, welcher über die jeweilige Transporteinrichtung 11, 11a, 11b hinwegsteht und eine drehbar gelagerte Umlenkrolle 35 trägt. Auf die Umlenkrolle 35 ist ein Zugseil 34 aufgelegt und mit seinem ersten Ende im Bereich der Aufgabeseite 12 an der Transporteinrichtung 11, 11a, 11b festgelegt. Ein zweites Ende des Zugseiles 34 ist an einer Seiltrommel 33 befestigt, die durch Inbetriebnahme des Stellmotors 38 das Zugseil 34 auf- oder abrollt und dadurch ein Verschwenken der Aufgabeseiten 12 der ersten und zweiten Transporteinrichtung 11a, 11b in die untere Höhenlage Hᵤ und zurück in die obere Höhenlage Hₒ ermöglicht.

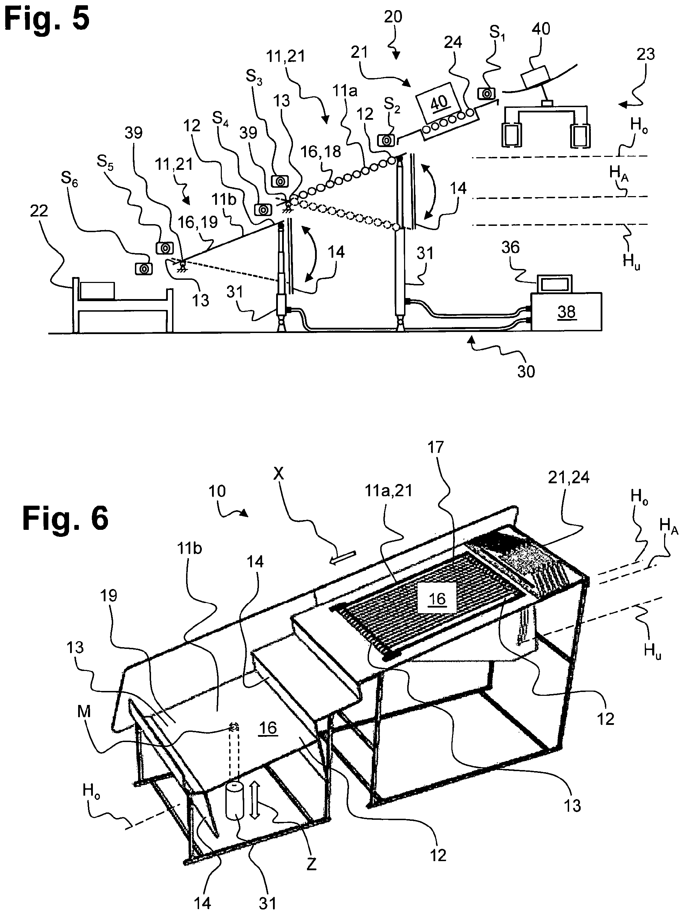

In der Fig. 5 sind beispielhaft die Transportbahnen 16 der ersten Transporteinrichtung 11a aus einer nicht angetriebenen Rollenbahn 18 und die der zweiten Transporteinrichtung 11b aus einer Rutsche 19 gebildet. Für ein Leerfahren der Endstelleneinrichtung 10 gemäß Fig. 5 wird zunächst die Rutsche 19 der zweiten Transporteinrichtung 11b mittels des Fluidzylinders 31 angehoben bis alle Warenstücke 40 auf den Entnahmetisch 40 gerutscht sind. Anschließend erfolgt das Anheben und Aufwärtsschwenken der Rollenbahn 18 aus der unteren Höhenlage Hᵤ in Richtung der oberen Höhenlage Hₒ. Spätestens mit Überschreiten des Höhenniveaus H_{A} der Abgabeseite 13 der ersten Transporteinrichtung 11a beginnen die darauf abgelegten Warenstücke 40 in Richtung des Entnahmetisches 22 zu rutschen.

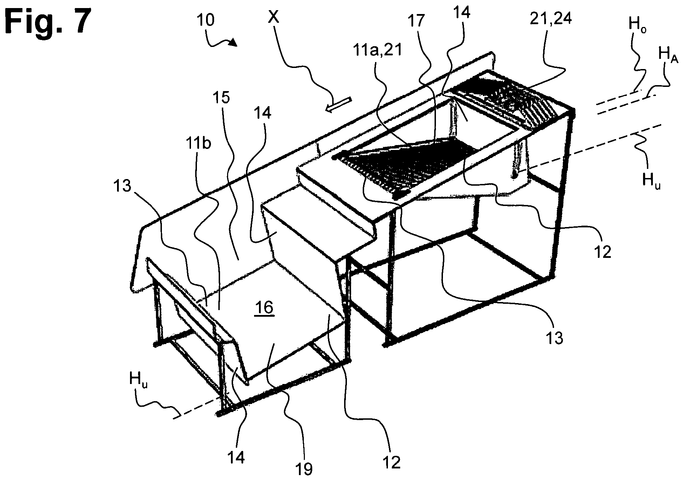

Die Fig. 6 zeigt eine weitere Ausführungsform der erfindungsgemäßen Endstellenvorrichtung 10, die in Förderrichtung X gesehen einen Staurollenförderer 24, eine erste Transporteinrichtung 11a und eine zweite Transporteinrichtung 11b umfasst. In der Darstellung der Fig. 6 befinden sich sowohl die erste als auch die zweite Transporteinrichtung 11a, 11b in einer Transportstellung, das heißt die Aufgabeseite 12 der Transporteinrichtung 11a und die gesamte Transporteinrichtung 11b sind jeweils in der oberen Höhenlage Hₒ festgelegt. In der Fig. 7 befinden sich die erste und zweite Transporteinrichtung 11a, 11b der Endstellenvorrichtung 10 gemäß Fig. 6 in einer abgesenkten Position in der unteren Höhenlage Hᵤ, welche im Betrieb einem mit Warenstücken 40 beladenen Zustand entspricht.

Der Staurollenförderer 24 bildet gleichzeitig das zulaufseitige Transportmittel 21 für die erste Transporteinrichtung 11a und die erste Transporteinrichtung 11a für die zweite Transporteinrichtung 11b.

Die erste Transporteinrichtung 11a ist im vorliegenden Ausführungsbeispiel als Gurtbandanlage 17 in Form eines Streifengurtbandförderers ausgebildet. Die Gurtbandanlage 17 ist im Bereich ihrer Abgabeseite 13 drehbeweglich mit einem vorgegebenen Höhenniveau H_{A} gelagert und die Aufgabeseite 12 aus der in Fig. 6 gezeigten oberen Höhenlage Hₒ zum Speichern von nicht gezeigten Warenstücken 40 in die untere Höhenlage Hᵤ entsprechend Fig. 7 verschwenkbar angeordnet.

Bei einer weitgehend leeren Endstellenvorrichtung 10 gelangen Warenstücke 40 zunächst über die erste Transporteinrichtung 11a hinweg und fallen von dieser auf die zweite Transporteinrichtung 11b. Die zweite Transporteinrichtung 11b ist in der Fig. 6 und Fig. 7 beispielhaft als Rutsche 19 dargestellt, könnte aber auch eine Gurtbandanlage 17, eine Rollenbahn 18, ein Luft- oder Kugeltisch (nicht gezeigt) sein.

Die zweite Transporteinrichtung 11b ist ausschließlich in einer translatorischen Verfahrrichtung Z beweglich gelagert und befindet sich mit der Aufgabeseite 12 und der Abgabeseite 13 gemäß Fig. 6 in der oberen Höhenlage Hₒ. Aufgrund der zwangsgeführten Lagerung der zweiten Transporteinrichtung 11b nehmen stets die Aufgabeseite 12 und die Abgabeseite 13 gleichzeitig ihre entsprechende obere oder untere Höhenlage Hₒ, Hᵤ ein. Die entsprechende obere oder untere Höhenlage Hₒ, Hᵤ ist mittels eines Fluidzylinders 31 einstellbar, der vorzugsweise im Masseschwerpunkt M von unten an die zweite Transporteinrichtung 11b angreift.

Die Rutsche 19 der zweiten Transporteinrichtung 11b ist in Förderrichtung X beidseitig von einer stehenden Rückstauwand 14 begrenzt und seitlich von gegenüberliegenden Seitenwänden 14a, von denen aus Übersichtsgründen lediglich die in der Bildebene hintere Seitenwand 14a gezeigt ist, umgeben. Die beiden Seitenwände 14a und die beiden Rückstauwände 14 grenzen in Umfangsrichtung abwechselnd aneinander an und bilden einen kastenförmigen Speicherraum 15, in welchem Warenstücke 40 insbesondere in abgesenkter unterer Höhenlage Hᵤ der zweiten Transporteinrichtung 11b in mehreren Ebenen stapelbar sind.

### Bezugszeichenliste

- 10: Endstellenvorrichtung
- 11: Transporteinrichtung
- 11a: erste Transporteinrichtung
- 11b: zweite Transporteinrichtung
- 12: Aufgabeseite
- 13: Abgabeseite
- 14: Rückstauwand
- 14a: Seitenwand
- 15: Speicherraum Warenstücke
- 16: Transportbahn
- 17: Gurtbandanlage
- 17a: Obertrum
- 17b: Untertrum
- 17c: Gurtband
- 18: Rollenbahn
- 19: Rutsche

- 20: Sortier- und Kommissionieranlage
- 21: zulaufseitiges Transportmittel
- 22: Entnahmetisch
- 23: Sorter
- 24: Staurollenförderer

- 30: Antriebseinheit
- 31: Fluidzylinder
- 32: Galgen
- 33: Seiltrommel
- 34: Zugseil
- 35: Umlenkrolle
- 36: elektronisches Steuergerät
- 37: Standsäule
- 38: Stellmotor
- 39: Schwenklager

- 40: Warenstücke

- α: Neigungswinkel
- H_{A}: Höhenniveau Abgabeseite
- Hₒ: obere Höhenlage
- Hᵤ: untere Höhenlage
- H_{W}: vorgebbare Beladungshöhe
- M: Masseschwerpunkt
- S₁₋₆: Beladungshöhensensor
- X: Förderrichtung
- Z: translatorische Verfahrrichtung

## Patentansprüche

1. Endstellenvorrichtung (10) für eine Sortier- und Kommissionieranlage (20), wobei die Endstellenvorrichtung (10) mindestens eine Transporteinrichtung (11, 11a, 11b) mit einer Aufgabeseite (12) und einer Abgabeseite (13) aufweist, an deren Aufgabeseite (12) Warenstücke (40) eines zulaufseitigen Transportmittels (21) aufgebbar und bis zum Ende eines Beladungszyklus auf der Transporteinrichtung (11, 11a, 11b) speicherbar sind, wobei mindestens die Aufgabeseite (12) der Transporteinrichtung (11, 11a, 11b) während des Beladungszyklus derart aus einer oberen Höhenlage (Hₒ) in eine untere Höhenlage (Hᵤ) abgesenkt ist, dass ein Speicherraum entsteht in dem die Warenstücke (40) mehrlagig auf der Transporteinrichtung (11, 11a, 11b) abgelegt werden, **dadurch gekennzeichnet, dass** die mindestens eine Transporteinrichtung (11, 11a, 11b) in der oberen Höhenlage (Hₒ) der Aufgabeseite (12) einen zwischen der Transporteinrichtung (11, 11a, 11b) und einer horizontalen Ebene aufgespannten negativen Neigungswinkel (α) aufweist, und infolgedessen in Transportrichtung abwärts geneigt ist.

2. Endstellenvorrichtung (10) nach Anspruch 1, **dadurch gekennzeichnet, dass** die obere Höhenlage (Hₒ) der Aufgabeseite (13) unter ein Höhenniveau (H_{A}) der Abgabeseite (13) absenkbar ist.

3. Endstellenvorrichtung (10) nach Anspruch 1 oder 2, **dadurch gekennzeichnet, dass** die mindestens eine Transporteinrichtung (11, 11a, 11b) um ihre Abgabeseite (13) schwenkbar gelagert ist.

4. Endstellenvorrichtung nach Anspruch 1, **dadurch gekennzeichnet, dass** die Aufgabeseite (12) translatorisch zusammen mit der Transporteinrichtung (11, 11a, 11b) absenkbar oder anhebbar ist.

5. Endstellenvorrichtung (10) nach einem der Ansprüche 1 bis 4, **dadurch gekennzeichnet, dass** die Abgabeseite (13) einer ersten Transporteinrichtung (11a) an die Aufgabeseite (12) einer zweiten Transporteinrichtung (11b) angrenzt, wobei das zulaufseitige Transportmittel (21) aus der ersten Transporteinrichtung (11a) gebildet ist.

6. Endstellenvorrichtung (10) nach einem der Ansprüche 1 bis 5, **dadurch gekennzeichnet, dass** die Aufgabeseite (12) mittels einer Antriebseinheit (30) zwischen der oberen Höhenlage (Hₒ) und der unteren Höhenlage (Hᵤ) verfahrbar ist.

7. Endstellenvorrichtung (10) nach Anspruch 6, **dadurch gekennzeichnet, dass** die Antriebseinheit (30) mit der Aufgabeseite (12) der Transporteinrichtung (11, 11a, 11b) verbunden ist.

8. Endstellenvorrichtung nach Anspruch 6, **dadurch gekennzeichnet, dass** die Antriebseinheit (30) an der Transporteinrichtung (11, 11a, 11b) im Bereich ihres Masseschwerpunkts (M) angreift

9. Endstellenvorrichtung (10) nach einem der Ansprüche 6 bis 8, **dadurch gekennzeichnet, dass** die Antriebseinheit (30) einen Fluidzylinder (31) und/oder einen Linearantrieb umfasst.

10. Endstellenvorrichtung (10) nach Anspruch 6 bis 8, **dadurch gekennzeichnet, dass** über der Transporteinrichtung (11, 11a, 11b) ein Galgen (32) angeordnet ist und die Antriebseinheit (30) mit einer Seiltrommel (33) und einem darauf aufgelegten Zugseil (34) zusammenwirkt, wobei die Antriebseinheit (30) oder eine Umlenkrolle (35) an dem Galgen (32) befestigt ist.

11. Endstellenvorrichtung (10) nach einem der Ansprüche 1 bis 10, **dadurch gekennzeichnet, dass** an der Aufgabeseite (12) und/oder der Abgabeseite (13) der mindestens einen Transporteinrichtung (11, 11a, 11b) ein Beladungshöhensensor (S₁₋₆) angeordnet ist.

12. Endstellenvorrichtung (10) nach Anspruch 11, **dadurch gekennzeichnet, dass** der Beladungshöhensensor (S₁₋₆) aus einer Lichtschranke, einem Lichttaster und/oder Ultraschallsensor gebildet ist.

13. Endstellenvorrichtung (10) nach Anspruch 11 oder 12, **dadurch gekennzeichnet, dass** mehrere Transporteinrichtungen (11, 11a, 11b) vorhanden sind, deren zugehörige(r) Beladungshöhensensor(en) (S₁₋₆) und deren jeweilige Antriebseinheit (30) an ein elektronisches Steuergerät (36) angeschlossen sind und bei einem Überschreiten einer vorgebbaren Beladungshöhe (Hw) der zuerst auslösende Beladungshöhensensor (S₁₋₆) ein Absenken der zugehörigen Aufgabeseite (12) initiiert.

14. Endstellenvorrichtung (10) nach einem der Ansprüche 1 bis 13, **dadurch gekennzeichnet, dass** die mindestens eine Transporteinrichtung (11, 11a, 11b) eine Transportbahn (16) aus einem Obertrum (17a) einer Gurtbandanlage (17), einer Rollenbahn (18), einem Kugeltisch, einem Lufttisch und/oder einer Rutsche (19) aufweist.

## Claims

1. An end-point device (10) for a sorting and picking system (20), wherein the end-point device (10) has at least one transport device (11, 11a, 11b) with a loading side (12) and a delivery side (13), on the loading side (12) of which items (40) can be loaded onto a transport means (21) on the in-feed side and can be stored on the transport device (11, 11a, 11b) until the end of a charging cycle, wherein at least the loading side (12) of the transport device (11, 11a, 11b) during the charging cycle is lowered from an upper level (Hₒ) to a lower level (Hᵤ) in such a way that a storage space is created in which the items (40) are placed in multiple layers on the transport device (11, 11a, 11b), **characterized in that** the at least one transport device (11, 11a, 11b) at the upper level (Hₒ) of the loading side (12) has a negative inclination angle (α) formed between the transport device (11, 11a, 11b) and a horizontal plane and is consequently inclined downwards in the transport direction.

2. The end-point device (10) of claim 1, **characterized in that** the upper level (Hₒ) of the loading side (13) can be lowered below a height (H_{A}) of the delivery side (13).

3. The end-point device (10) of claim 1 or 2, **characterized in that** the at least one transport device (11, 11a, 11b) is pivotally mounted about its delivery side (13).

4. The end-point device of claim 1, **characterized in that** the loading side (12) can be lowered or raised translationally together with the transport device (11, 11a, 11b).

5. The end-point device (10) of any one of claims 1 to 4, **characterized in that** the delivery side (13) of a first transport device (11a) adjoins the loading side (12) of a second transport device (11b), wherein the in-feed side transport means (21) is formed by the first transport device (11a).

6. The end-point device (10) of any one of claims 1 to 5, **characterized in that** the loading side (12) is movable by means of a drive unit (30) between the upper level (Hₒ) and the lower level (Hᵤ).

7. The end-point device (10) of claim 6, **characterized in that** the drive unit (30) is connected with the loading side (12) of the transport device (11, 11a, 11b).

8. The end-point device of claim 6, **characterized in that** the drive unit (30) acts on the transport device (11, 11a, 11b) in the region of its center of mass (M).

9. The end-point device (10) of any one of claims 6 to 8, **characterized in that** the drive unit (30) comprises a fluid cylinder (31) and/or a linear drive.

10. The end-point device (10) of claims 6 to 8, **characterized in that** a gallows (32) is arranged above the transport device (11, 11a, 11b) and the drive unit (30) interacts with a cable drum (33) and a traction cable placed thereon (34), wherein the drive unit (30) or a deflection roller (35) is attached to the gallows (32).

11. The end-point device (10) of any one of claims 1 to 10, **characterized in that** a charging height sensor (S₁₋₆) is arranged on the loading side (12) and/or on the delivery side (13) of the at least one transport device (11, 11a, 11b).

12. The end-point device (10) of claim 11, **characterized in that** the charging height sensor (S₁₋₆) is formed by a light barrier, a light sensor and/or an ultrasonic sensor.

13. The end-point device (10) of claim 11 or 12, **characterized in that** a plurality of transport devices (11, 11a, 11b) is present, the associated charging height sensor(s) (S₁₋₆) and the respective drive unit (30) of which being connected to an electronic control unit (36) and wherein, when a predeterminable charging height (H_{w}) is exceeded, the charging height sensor (S₁₋₆) that triggers first initiates a lowering of the associated loading side (12).

14. The end-point device (10) of any one of claims 1 to 13, **characterized in that** the at least one transport device (11, 11a, 11b) comprises a transport track (16) consisting of an upper run (17a), a belt conveyor system (17), a roller conveyor (18), a ball table, an air table and/or a slide (19).

## Revendications

1. Dispositif terminal (10) pour un système de tri et de préparation de commandes (20), dans lequel le dispositif terminal (10) présente au moins un mécanisme d'entraînement (11, 11a, 11b) avec un côté de chargement (12) et un côté de déchargement (13), des articles de marchandises (40) d'un moyen de transport en amont (21) peuvent être chargés sur son côté de chargement (12) et peuvent être stockés sur le mécanisme d'entraînement (11, 11a, 11b) jusqu'à la fin d'un cycle de chargement, dans lequel au moins le côté de chargement (12) du mécanisme d'entraînement (11, 11a, 11b) est baissé d'un niveau supérieur (Hₒ) à un niveau inférieur (Hᵤ) pendant le cycle de chargement, de sorte qu'un espace de stockage est constitué dans lequel les articles de marchandises (40) sont placés en plusieurs couches sur le mécanisme d'entraînement (11, 11a, 11b), **caractérisé en ce que**, au niveau supérieur (Hₒ) du côté de chargement (12), l'au moins un mécanisme d'entraînement (11, 11a, 11b) présente un angle d'inclinaison négatif (α) ouvert entre le mécanisme d'entraînement (11, 11a, 11b) et un plan horizontal et est donc incliné vers le bas dans le mécanisme d'entraînement.

2. Dispositif terminal (10) selon la revendication 1, **caractérisé en ce que** le niveau supérieur (Hₒ) du côté de chargement (12) peut être abaissé en dessous d'un niveau de hauteur (H_{A}) du côté de déchargement (13).

3. Dispositif terminal (10) selon la revendication 1 ou 2, **caractérisé en ce que** l'au moins un mécanisme d'entraînement (11, 11a, 11b) est stocké de manière pivotante autour de son côté de déchargement (13).

4. Dispositif terminal selon la revendication 1, **caractérisé en ce que** le côté de chargement (12) peut être abaissé ou relevé en translation conjointement avec le mécanisme d'entraînement (11, 11a, 11b).

5. Dispositif terminal (10) selon l'une des revendications 1 à 4, **caractérisé en ce que** le côté de déchargement (13) d'un premier mécanisme d'entraînement (11a) jouxte le côté de chargement (12) d'un second mécanisme d'entraînement (11b), dans lequel le moyen de transport en amont (21) est formé à partir du premier mécanisme d'entraînement (11a).

6. Dispositif terminal (10) selon l'une des revendications 1 à 5, **caractérisé en ce que** le côté de chargement (12) est mobile au moyen d'une unité d'entraînement (30) entre le niveau supérieur (Hₒ) et le niveau inférieur (Hᵤ).

7. Dispositif terminal (10) selon la revendication 6, **caractérisé en ce que** l'unité d'entraînement (30) est liée au côté de chargement (12) du mécanisme d'entraînement (11, 11a, 11b) .

8. Dispositif terminal selon la revendication 6, **caractérisé en ce que** l'unité d'entraînement (30) s'engage sur le mécanisme d'entraînement (11, 11a, 11b) au niveau de son centre de masse (M) .

9. Dispositif terminal (10) selon l'une des revendications 6 à 8, **caractérisé en ce que** l'unité d'entraînement (30) comprend un vérin hydraulique (31) et/ou un entraînement linéaire.

10. Dispositif terminal (10) selon les revendications 6 à 8, **caractérisé en ce qu'**une potence (32) est disposée au-dessus du mécanisme d'entraînement (11, 11a, 11b) et l'unité d'entraînement (30) coopère avec un tambour de câble (33) et un câble de traction (34) placé dessus, dans lequel l'unité d'entraînement (30) ou une poulie de renvoi (35) est fixée à la potence (32).

11. Dispositif terminal (10) selon l'une des revendications 1 à 10, **caractérisé en ce qu'**un capteur de hauteur de chargement (Si-e) est disposé sur le côté de chargement (12) et/ou le côté de déchargement (13) de l'au moins un mécanisme d'entraînement (11, 11a, 11b).

12. Dispositif terminal (10) selon la revendication 11, **caractérisé en ce que** le capteur de hauteur de chargement (S₁₋₆) est formé d'un barrage optique, d'un capteur de lumière et/ou d'un capteur à ultrasons.

13. Dispositif terminal (10) selon la revendication 11 ou 12, **caractérisé en ce que** plusieurs mécanisme d'entraînement (11, 11a, 11b) sont présents, dont le ou les capteur(s) de hauteur de chargement associé(s) (S₁₋₆) et l'unité d'entraînement (30) respective sont raccordés à un appareil de commande électronique (36) et le capteur de hauteur de chargement (S₁₋₆) qui se déclenche en premier initie un abaissement du côté de chargement associé (12) lorsqu'une hauteur de chargement (H_{w}) prédéfinie est dépassée.

14. Dispositif terminal (10) selon l'une des revendications 1 à 13, **caractérisé en ce que** l'au moins un mécanisme d'entraînement (11, 11a, 11b) présente une ligne de transport (16) constituée d'un brin supérieur (17a), d'une installation de courroie (17), d'un train de rouleaux (18), d'une table à billes, d'une table à coussin d'air et/ou d'un toboggan (19).
